# EUROPÄISCHE PATENTSCHRIFT

(11) **EP 2 843 338 B1**
(45) Veröffentlichungstag und Bekanntmachung des Hinweises auf die Patenterteilung: **14.02.2018**
(21) Anmeldenummer: 14002704.6
(22) Anmeldetag: 02.08.2014
(51) Int. Cl.: F26B 19/00, B60P 3/14, B60H 1/22, B60H 1/00

(54) **Fahrzeugaufbauvorrichtung für einen Sattelauflieger oder dergleichen**
Vehicle attachment device for a semi-trailer or the like
Dispositif de construction automobile pour un semi-remorque ou similaire

(30) Priorität: 15.08.2013 DE 202013007290 U
(43) Veröffentlichungstag der Anmeldung: 04.03.2015
(73) Patentinhaber: Haag, Markus, 74360 Ilsfeld (DE)
(72) Erfinder: Haag, Markus, 74360 Ilsfeld (DE)
(74) Vertreter: Clemens, Gerhard

(56) Entgegenhaltungen:
- FR-A1- 2 907 884
- US-A- 4 620 373
- US-A1- 2005 102 850

## Beschreibung

### TECHNISCHES GEBIET

Die vorliegende Erfindung betrifft eine Fahrzeugaufbauvorrichtung für einen Sattelauflieger, Fahrzeuganhänger, ein Fahrzeug oder dergleichen, wobei die Vorrichtung als autark betreibbarer Trockenraum für Holzpaletten ausgebildet ist, die Vorrichtung folgende Merkmale aufweist: einen Trockenraum mit einer Lagerfläche für die Paletten, die Luft innerhalb des Trockenraums erhitzt wird, eine Energiespeichereinrichtung zur Energieversorgung und eine Steuereinrichtung zur Steuerung der Prozessabläufe und Temperaturen in dem Trockenraum vor, während und nach des Trocknungsvorgangs der Paletten.

### STAND DER TECHNIK

Holzpaletten, die für den Export bestimmt sind, müssen den sogenannten IPPC-Standard erfüllen. Mit dem IPPC-Standard ISMP Nr. 15 für Holzverpackungsmaterial wurden für Pflanzen gesundheitliche Behandlungs- und Überwachungsmaßnahmen festgelegt, um das Risiko der Ausbreitung von Schadorganismen durch Holzverpackungsmaterial im internationalen Handel zu reduzieren. Dieser von der International Plan Protection Convention (IPPC) erstellte Standard soll zudem verhindern, dass Holzschädlinge eingeschleppt werden, die einheimische Waldbestände gefährden können. Um den Standard zu gewährleisten müssen die Holzpaletten einer Hitzebehandlung bei einer vorgegebenen Kerntemperatur über eine vorgegebene Zeit, zum Beispiel durch technische Trocknung unterzogen werden.

Des Weiteren ist der Bedarf an trockenen Holzpaletten im Bereich der Lebensmittelindustrie sehr groß, da viele Lebensmittel mit ihrer Verpackung, zum Beispiel Kartonagen, direkt auf den Holzpaletten gelagert, transportiert und auch in Verkaufsräumen auf Paletten angeboten werden. Daher muss auch bei einer längeren Lagerung garantiert sein, dass keine Durchfeuchtung des Lagerguts aufgrund des Feuchtigkeitsgehalts der Holzpalette stattfindet.

Somit stellt sich in vielen Industrieunternehmen das Problem, dass vorhandene Holzpaletten einem Trocknungsprozess unterworfen werden müssen, um die geforderten Standards zu erfüllen und um für den Export geeignet zu sein. Da Paletten, die am häufigsten verwendeten Ladungsträger für Gebrauchsgüter sind, ist hierzu ein enormer Aufwand zu betreiben, da die Paletten zum Teil über große Strecken zu bekannten stationären Trocknungsanlagen transportiert werden müssen, dann dort dem standardisierten Trocknungsverfahren unterzogen werden und anschließend wieder zum Unternehmen zurück geführt werden müssen.

Die US 4 620 373 A offenbart einen Fahrzeuganhänger gemäß den Merkmalen des Oberbegriffs des Anspruchs 1. Der Fahrzeuganhänger weist eine Trockenkammer zum Trocknen von Holz auf. Der obere Teil des Fahrzeuganhängers ist um eine in Längsachse verlaufende Drehachse drehbar vorhanden, so dass im aufgeschwenkten Zustand das Innere des Trockenraums mit Holz beladen werden kann. Zum Trocknen des Holzes wird der obere Bereich zurückgeschwenkt, so dass ein in sich luftdichter Raum vorhanden ist. Daran anschließend wird im Inneren des Trockenraums ein Vakuum erzeugt und in einem zeitlichen Ablauf werden unterschiedliche Drücke erzeugt, um ein Austreten des im Holz gespeicherten Wassers zu bewirken. Dieser Vorgang wird unterstützt durch an den Seitenwänden vorhandenen Heizeinheiten, die die Temperatur innerhalb des Trockenraums während des Trocknungsprozesses erhöhen. Die wassergesätigte Luft wird während des Trocknungsprozesses abgesaugt.

Die US 2005/102850 A1 offenbart einen Fahrzeuganhänger mit einem Fahrzeugaufbau, der als Trockenraum ausgebildet ist. Dieser Trockenraum ist für die Trocknung von Erdnüssen ausgerichtet. Der Trockenraum wird durch eine perforierte durchgehende Lagerplatte in einen oberen Bereich und in einen unteren Bereich unterteilt. In den oberen Bereich werden auf die Lagerplatte die Erdnüsse eingefüllt. In den unteren Bereich wird von außen her Trocknungsluft eingeblasen, um die Erdnüsse zu trocknen.

Die FR 2 907 884 A1 offenbart ein stationären Trockenraum, um Holz zu trocknen. Der Trockenraum weist ein Luftkanalsystem auf, das eine Diagonalströmung der erwärmten Trockenluft innerhalb des Trockenraums ermöglicht. Dabei werden die Luftströme durch einen Brenner erhitzt und die Temperaturen innerhalb des Trockenraums kontrolliert.

### DARSTELLUNG DER ERFINDUNG

Ausgehend von dem genannten Stand der Technik liegt der vorliegenden Erfindung die Aufgabe beziehungsweise das technische Problem zugrunde, eine Lösung zur effizienten Trocknung und IPPC Behandlung von Paletten zur Verfügung zu stellen, die über eine hohe Leistungsfähigkeit verfügt, die die Einhaltung der erforderlichen Standards gewährleistet und den aufwendigen Hin- und Hertransport vom Unternehmen zur stationären Trocknungskammer und wieder zurück entfallen lässt sowie hierdurch zu einer Umweltentlastung und Kostenreduzierung beiträgt. Auch die Reduzierung von Transporten ist ein wichtiges Merkmal der Erfindung.

Die erfindungsgemäße Lösung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Lösung der vorliegenden Aufgabe wird demgemäß dadurch bereit gestellt, dass mit der Vorrichtung eine Trocknung und ein Nachweis der Trocknung von Holzpaletten gemäß dem International Plan Protection Convention (IPPC) - Standard umgesetzt wird, indem ein Luftkanalsystem mit einem nach außen kommunizierenden Frischluftkanal und einem Abluftkanal, das mit dem Trockenraum in Kommunikationsverbindung steht, vorhanden ist zumindest einen Lüfter zum Erzeugen einer Luftströmung innerhalb des Luftkanalsystems vorhanden ist, einen Brenner zum Erhitzen der Luft innerhalb des Luftkanalsystems vorhanden ist, der Trockenraum in Längsrichtung gesehen einen linken und rechten oberen Luftabsaugkanal und einen linken und rechten unteren Lufteinblaskanal aufweist, die Kanäle im Wesentlichen auf der gesamten Länge des Trockenraums vorhanden sind, eine erste und eine zweite über die Steuereinrichtung ansteuerbare Umlenkeinheit innerhalb des Luftkanalsystems vorhanden ist, mittels derer die Luftströmung von dem rechten oberen Luftabsaugkanal zu dem linken unteren Lufteinblaskanal oder alternativ von dem linken oberen Luftabsaugkanal zu dem rechten unteren Lufteinblaskanal leitbar ist, wobei die Steuereinrichtung die Umlenkeinheiten zur Änderung der Luftströmungsrichtung jeweils nach Ablauf eines vorgebbaren Zeitintervalls alternierend schaltet, und eine Datenspeicher- und Anzeigeeinrichtung vorhanden ist, die mit mehreren Temperatursensoren kommuniziert und die Temperaturwerte innerhalb des Trockenraums in Abhängigkeit der Zeit während des Trockenprozesses abrufbar speichert.

Ein wesentliches Merkmal ist die Mobilität des Trockenraums indem er in eine Fahrzeugaufbauvorrichtung integriert vorhanden ist. Daher kann der Trockenraum problemlos zu den jeweiligen Orten der Unternehmen transportiert werden, um vor Ort den Trocknungsvorgang durchzuführen. Die Vorrichtung ist in kürzester Zeit vor Ort funktionsbereit und gewährleistet einen qualifizierten Trocknungsvorgang. Die Vorrichtung ist derart konzipiert, dass sie vollständig autonom betrieben werden kann beziehungsweise zur Energieversorgung einzelner weniger elektrischer oder elektronischer Komponenten lediglich Strom benötigt wird, der in Industrieunternehmen jederzeit zur Verfügung steht. Anstatt die in großer Zahl vorhandenen Paletten von Dienstleistern abholen und getrocknet wieder zurück transportieren zu lassen, können mit der erfindungsgemäßen Fahrzeugaufbauvorrichtung mit Trockenraum die Paletten auf den Betriebshof des jeweiligen Unternehmens getrocknet werden. Die normalerweise zusätzlichen Transportkosten für die Paletten zur stationären Trocknungsanlage entfallen.

Eine besonders vorteilhafte Weiterbildung, die für optimale Strömungsverhältnisse innerhalb des Trockenraums zur Erzielung optimaler Trocknungsergebnisse zeichnet sich dadurch aus, dass die Luftabsaug- und Einblaskanäle jeweils in der in das Innere des Trockenraums weisenden Seitenwandung ein durchgehendes Lochmuster aufweisen, durch das die Luft eingeblasen beziehungsweise abgesaugt wird.

Eine bezüglich der Energiebilanz besonders vorteilhafte Ausgestaltung zeichnet sich dadurch, aus innerhalb des Luftkanalsystems ein Wärmetauscher vorhanden ist, durch den die abgesaugte feuchte, warme Prozessluft und die angesaugte Frischluft zur Vorerwärmung der letzteren geführt ist.

Eine weitere vorteilhafte Ausgestaltung, die die Energiebilanz weiter verbessert, zeichnet sich dadurch aus, dass innerhalb eines Leitluftkanals eine von der Steuereinrichtung ansteuerbare Drosseleinheit vorhanden ist, mittels derer die Menge der nach außen abgeführten Prozessluft und die Menge der im Strömungskreislauf verbleibenden Prozessluft einstellbar ist.

Ein besonders einfacher Transport der Paletten innerhalb des Trockenraums ist dadurch gewährleistet, dass gemäß einer bevorzugten Weiterbildung die Lagerfläche zumindest eine, insbesondere zwei, Rollenbahn/en aufweist, deren Rollen insbesondere motorisch antreibbar ausgebildet sind.

Bevorzugt ist die Energiespeichereinrichtung als Flüssiggasspeichereinrichtung ausgebildet, die bezüglich ihrer Anordnung bevorzugt unterhalb des Trockenraums vorhanden ist.

Eine hinsichtlich der Energiebilanz besonders effiziente und vorteilhafte Weiterbildung zeichnet sich dadurch aus, dass der Trockenraum von einer Wärmedämmschicht umgeben ist.

Zu Dokumentationszwecken ist es besonders vorteilhaft eine Datenspeicher- und Anzeigeeinrichtung vorzusehen, die mit mehreren an vorgegebenen Positionen innerhalb des Trockenraums angeordneten Temperatursensoren kommuniziert und die Temperaturwerte innerhalb des Trockenraums in Abhängigkeit der Zeit während des Trocknungsprozesses abrufbar speichert, so dass der Nachweis der Einhaltung des IPPC-Standards problemlos möglich ist.

Zur optimalen Nutzung des für die Fahrzeugaufbauvorrichtung zur Verfügung stehenden Raumvolumens ist besonders vorteilhaft, dass ein vor dem Trockenraum stirnseitig angeordneter Maschinenraum vorhanden ist, in dem die wesentlichen Komponenten zur Umsetzung des Trocknungsprozesses wie beispielsweise Lüfter, Brenner, Steuereinrichtung, Wärmetauscher, Datenspeicher- und Anzeigeeinrichtung angeordnet sind.

Ein erfindungsgemäßer Sattelauflieger, Fahrzeuganhänger oder ein erfindungsgemäßes Fahrzeug zeichnet sich dadurch aus, dass eine Fahrzeugaufbauvorrichtung der oben beschriebenen Art vorhanden ist.

Der Prozess für den beispielsweise mit Gas direkt befeuerten Trockenraum läuft im Wesentlichen wie folgt ab. Der Brenner, bevorzugt ein vormischender Gasflächenbrenner, ist direkt in den Prozessluftkanal des zur Trocknung dienenden Trockenraums eingebaut. Die Betriebsweise des Brenners ist im eingestellten Leistungsbereich, abhängig von der Trocknungs-Lufttemperatur, stufenlos regelbar mit Hilfe der Steuereinrichtung. Die Regelung der Gasmenge erfolgt, bei konstant bleibendem Verbrennungsluftstrom, durch ein Gas-Regel-Ventil, das von der Steuereinrichtung angesteuert wird.

Die Prozess-Verbrennungsluft wird mit einem im Maschinenraum vor dem Trockenraum angeordneten Lüfter, insbesondere Radialventilator, über die im Trockenraum vorhandenen längsseitigen Ansaugkanäle abgesaugt. Danach wird die Prozessluft über einen Kanal mittels dem Gasflächenbrenner direkt erwärmt und über die Einblaskanäle in das Innere des Trockenraums zugeführt. Die Prozessluft strömt dabei bevorzugt über ein Lochdüsenblech der Lufteinblaskanäle auf das Trockengut (Paletten) aus.

Ein Teil der Prozessluft wird über einen mit einer feststellbaren Drosseleinheit versehenen Abluftkanal ins Freie abgeführt, der andere teil der Prozessluft wird wieder über den Brenner geleitet. Die Ansteuerung der Drosseleinheit erfolgt über die Steuereinrichtung, wobei die Drosseleinheit so eingestellt ist, dass unter Unterdruck im Trockenraum herrscht. Die Frischluft strömt durch einen Frischluftkanal in den Trockenraum ein beziehungsweise wird dem Strömungskreislauf zugeführt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Perspektivrückansicht einer Zugmaschine mit Sattelauflieger, wobei die Fahrzeugaufbauvorrichtung des Sattelaufliegers als Trockenraum mit Maschinenraum ausgebildet ist,
- Fig. 2: stark schematisierter Querschnitt durch die Fahrzeugaufbauvorrichtung gemäß Fig. 1,
- Fig. 3: stark schematisierter Längsschnitt durch die Fahrzeugaufbauvorrichtung gemäß Fig. 1 entlang Schnittführung I-I,
- Fig. 4: stark schematisierter Längsschnitt durch die Fahrzeugaufbauvorrichtung gemäß Fig. 1 entlang Schnittführung II-II,

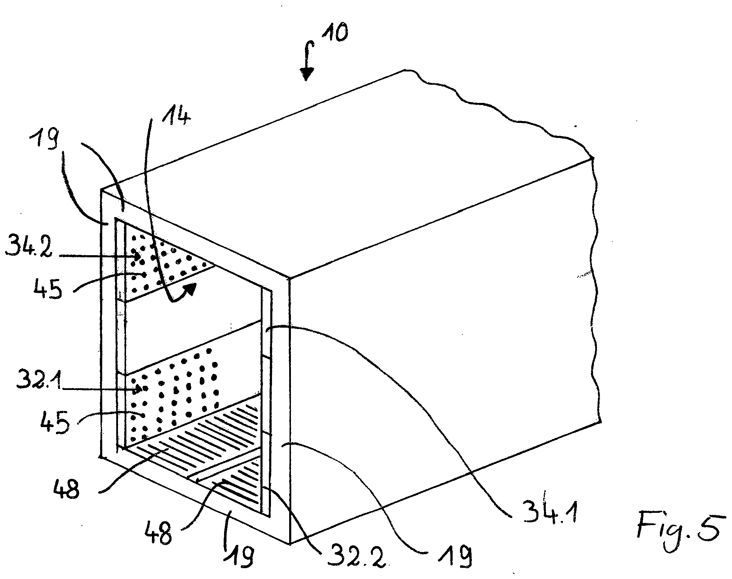

- Fig. 5: stark schematisierte Detailperspektive des hinteren Trockenraums der Fahrzeugaufbauvorrichtung gemäß Fig. 1 in geöffnetem Zustand (ohne Verschlusstüren) und
- Fig. 6: stark schematisierte Stirnansicht des Maschinenraums mit den wesentlichen Bauteilekomponenten und dem Luftkanalsystem, die für den Trocknungsprozess der in dem Trockenraum angeordneten Paletten benötigt werden.

### WEGE ZUM AUSFÜHREN DER ERFINDUNG

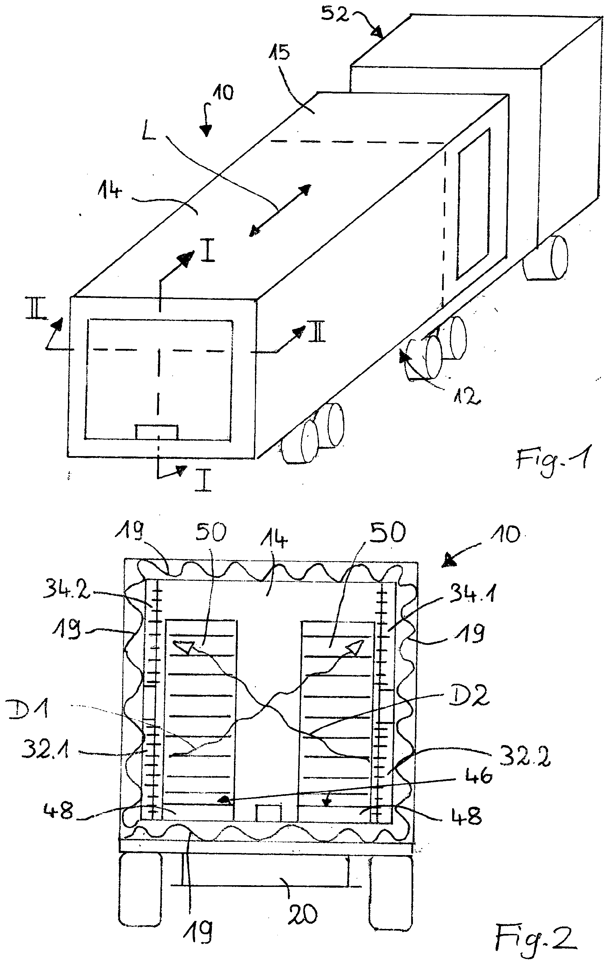

In Fig. 1 ist stark schematisiert eine Zugmaschine 52 mit einem Sattelauflieger 12 perspektivisch dargestellt, wobei der Sattelauflieger 12 eine Fahrzeugaufbauvorrichtung 10 aufweist, die einen im Wesentlichen quaderförmigen Trockenraum 14 mit stirnseitig zur Zugmaschine 52 vorgeschalteten Maschinenraum 15 besitzt.

Der Trockenraum 14 weist bodenseitig eine Lagerfläche 46 mit zwei parallel beabstandet in Längsrichtung L durchgehenden Rollbahnen 48 auf, die geeignet sind, Holzpaletten 50 als Palettenstapel aufzunehmen und in Längsrichtung L innerhalb des Trockenraums 14 zu transportieren.

Der Trockenraum 14 selbst ist außenseitig von einer Wärmedämmung 19 umgeben. Unterseitig ist an dem Trockenraum 14 beziehungsweise der Fahrzeugaufbauvorrichtung 10 eine Energiespeichereinrichtung 20 angeordnet, die als Flüssiggasspeichereinrichtung ausgebildet ist und die die nötige Brennenergie zur Erzeugung von erwärmter Prozessluft für den Trocknungsvorgang zur Verfügung stellt. Im oberen rechten und linken Seitenrandbereich des Trockenraums 14 ist ein erster beziehungsweise zweiter Lufteinblaskanal 32 auf die gesamte Länge des Trockenraums 14 in Längsrichtung L vorhanden, die auf ihrer Innenseite ein Lochmuster 45 aufweisen, durch das hindurch die Prozessluft aus dem Inneren des Trockenraums 14 abgesaugt werden kann.

Im unteren rechten und linken Seitenrandbereich des Trockenraums 14 ist jeweils ein Lufteinblaskanal 32.1, 32.2 in Längsrichtung L durchgehend vorhanden, der ebenfalls innenseitig ein Lochmuster 45 aufweist, durch das hindurch Prozessluft in das Innere des Trockenraums 14 eingeblasen werden kann.

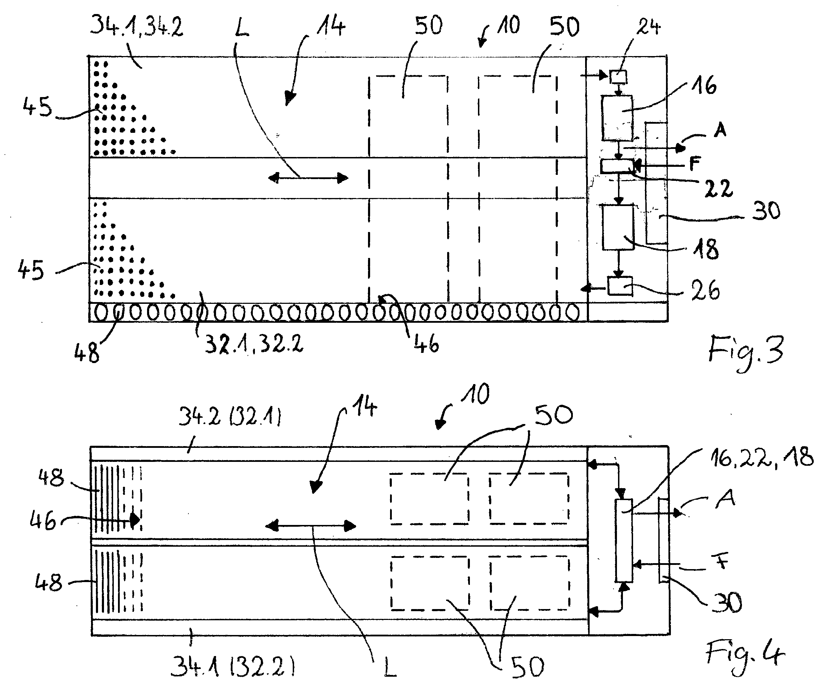

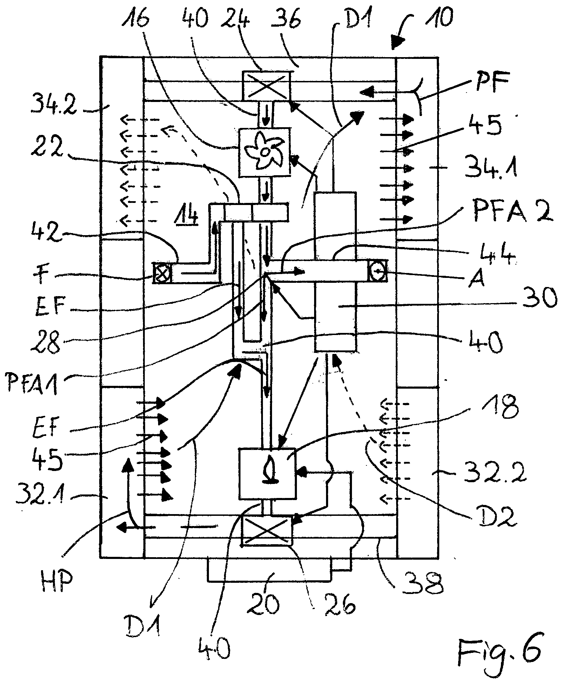

Der Trocknungsprozess mit den dafür relevanten Bauteilen wird im Folgenden anhand der stark schematisierten Darstellung einer Ansicht des Maschinenraums 15 in Fig. 6 in Verbindung mit den Figuren 3 und 4 beschrieben.

Die im Maschinenraum 15 oberseitig rechts und links ankommenden Luftabsaugkanäle 34.1, 34.2 sind über einen ersten Luftleitkanal 36 miteinander verbunden. In dem ersten Luftleitkanal 36 ist eine erste Umlenkeinheit 24 geschaltet, an die ein dritter Luftleitkanal 40 anschließt, welcher zu einem Lüfter 16 führt. Der dritte Luftleitkanal 40 führt weiter über einen Wärmetauscher 22 zu einem Brenner 18. Nach dem Brenner 18 führt der dritte Luftleitkanal 40 zu einer zweiten Umlenkeinheit 26, die innerhalb eines Luftleitkanals 38 angeordnet ist, der den linken und rechten unteren Lufteinblaskanal 32.1, 32.2 miteinander verbindet.

Zwischen dem Wärmetauscher 22 und dem Brenner 18 ist an den dritten Luftleitkanal 40 ein Abluftkanal 44 angeschlossen, durch den hindurch die Abluft A nach außen gelangt.

An dem Wärmetauscher 22 ist weiterhin ein Frischluftkanal 42 angeschlossen, über den Frischluft F von außen her angesaugt wird und dem Luftströmungskreislauf beziehungsweise dem dritten Luftleitkanal 40 zugeführt wird.

Die erste und zweite Umlenkeinheit 26, der Lüfter 16, der Brenner 18 und die Energiezufuhr des Brenner 18 aus der Energiespeichereinrichtung 20 wird über eine in Fig. 6 schematisch dargestellte Steuereinheit 30 gesteuert.

Das Luftströmungssystem ist so schaltbar, dass es in zwei Strömungszuständen alternierend über die Steuereinrichtung 30 geschaltet werden kann. Es ist alternativ so geführt, nämlich dass in einem ersten Fall die feuchte Prozessluft PF aus dem rechten oberen Luftabsaugkanal 34.1 abgesaugt wird und die heiße Prozessluft HP in den linken unteren Lufteinblaskanal 32.1 geleitet wird und in einem zweiten Fall die Prozessluft PF aus dem linken oberen Luftabsaugkanal 34.2 abgesaugt wird und dem rechten unteren Lufteinblaskanal 32.2 als heiße Prozessluft HP zugeführt wird.

Die Luftführung im ersten beziehungsweise zweiten Fall wird bestimmt durch die Schaltung der ersten beziehungsweise zweiten Umlenkeinheit 26. In Fig. 6 ist der Zustand dargestellt, dass die Prozessluft PF von dem rechten oberen Luftabsaugkanal 34.1 von dem Lüfter 16 über den ersten Luftleitkanal 36 und den dritten Luftleitkanal 40 abgesaugt wird. Diese Prozessluft wird dann über den Wärmetauscher 22 geführt. Daran anschließend ist im Anschlusspunkt zwischen dem dritten Luftleitkanal 40 und dem Abluftkanal 44 eine Drosseleinheit 28 geschaltet, die von der Steuereinrichtung 30 beaufschlagt wird und die einen vorgebbaren Volumenanteil der abgekühlten feuchten Prozessluft PFA2 in den Abluftkanal 44 und damit nach außen leitet und gleichzeitig einen zweiten Anteil der Volumenmenge der feuchten abgekühlten Prozessluft PFA1 über den dritten Luftleitkanal 40 dem Brenner 18 zuführt. Gleichzeitig wird über den Frischluftkanal 42 Frischluft F über den Wärmetauscher 22 geführt, die danach als erwärmte Frischluft EF dem dritten Luftleitkanal 40 vor dem Brenner 18 zugeführt wird. Daran anschließend nach dem Brenner 18 wird über den dritten Luftleitkanal 40 die heiße Prozessluft HP über die zweite Umlenkeinheit 26 dem linken unteren Lufteinblaskanal 32.1 zugeführt, die die Prozessluft in Längsrichtung des Trockenraums 14 über das Lochmuster in das Innere des Trockenraums 14 abgibt. Dadurch wird innerhalb des Trockenraums 14 ein wesentlich diagonal von links unten nach oben verlaufender Prozessheißluftstrom D1 erzeugt.

Nach einem vorgegebenen Zeitintervall, zum Beispiel nach 5 Minuten, schaltet die Steuereinrichtung 30 die erste und zweite Umlenkeinheit 24, 26 um, so dass die Prozessluft über den linken oberen Luftabsaugkanal 34.2 vom Lüfter 16 abgesaugt wird, über den Wärmetauscher 22, die Drosseleinheit 28, den Brenner 18 und die zweite Umlenkeinheit 26 zum rechten unteren Lufteinblaskanal 32.2 geführt wird, so dass sich innerhalb des Trockenraums 14 eine Prozessluftrichtung D2 im Wesentlichen in diagonaler Richtung von rechts unten nach links oben ergibt (gestrichelte Pfeildarstellung in Fig. 6).

Mir der erfindungsgemäßen Fahrzeugaufbauvorrichtung 10, die als autarker Trockenraum 14 für Paletten 50 ausgebildet ist, steht eine mobile Vorrichtung zur Verfügung, mittels derer eine große Anzahl an Paletten 50 rationell und energiesparend getrocknet werden kann. Die Vorrichtung 10 arbeitet autark, das heißt lediglich ein Elektroanschluss für elektrischen beziehungsweise elektronischen Bauteile wie Steuereinrichtung 30, Lüfter 16, Komponenten des Brenners 18, Stellmotoren beziehungsweise Stellantriebe für die erste und zweite Umlenkeinheit 24, 26 und die Drosseleinheit 28 nötig, wobei alternativ gegebenenfalls ein Batteriebetrieb denkbar ist, so dass ein vollständiger autarker Betrieb möglich ist.

So können Industrieunternehmen, die eine hohe Anzahl getrockneten Paletten benötigen mit der erfindungsgemäßen Fahrzeugaufbauvorrichtung problemlos vor Ort bedient werden. Ein aufwendiger Transport der Paletten zu stationären Trocknungsvorrichtungen und wieder zurück entfällt vollständig.

Durch den Einsatz des Wärmetauschers 22, der Drosseleinheit 28, der alternativ diagonal wechselnden Strömungsrichtungen innerhalb des Raumes und des Einsatzes von einer Flüssiggasspeichereinrichtung 20 als Energieträger und in Verbindung mit der den Trockenraum 14 umgebenden Wärmedämmung 19 steht eine Fahrzeugaufbauvorrichtung 10 zur Verfügung, die energetisch höchst effizient arbeitet, die eine zuverlässige, den Standardrichtlinien entsprechende Trocknung der Paletten gewährleistet und zudem mobil ist.

## Patentansprüche

1. Fahrzeugaufbauvorrichtung (10) für einen Sattelauflieger (12), Fahrzeuganhänger, ein Fahrzeug oder dergleichen, wobei
- die Vorrichtung (10) als autark betreibbarer Trockenraum (14) für Holzpaletten (50) ausgebildet ist,
- die Vorrichtung (10) folgende Merkmale aufweist:
- einen Trockenraum (14) mit einer Lagerfläche (46) für die Paletten (50),
- die Luft innerhalb des Trockenraums (14) erhitzt wird,
- eine Energiespeichereinrichtung (20) zur Energieversorgung und
- eine Steuereinrichtung (30) zur Steuerung der Prozessabläufe und Temperaturen in dem Trockenraum (14) vor, während und nach des Trocknungsvorgangs der Paletten (50),
- **dadurch gekennzeichnet, dass**
- die Vorrichtung (10) Mittel enthält um eine Trocknung und ein Nachweis der Trocknung von Holzpaletten gemäß dem International Plan Protection Convention (IPPC) - Standard umsetzen zu können indem
- ein Luftkanalsystem (32, 34, 36, 38, 40, 42, 44) mit einem nach außen kommunizierenden Frischluftkanal (42) und einem Abluftkanal (44), das mit dem Trockenraum (14) in Kommunikationsverbindung steht, vorhanden ist
- zumindest einen Lüfter zum Erzeugen einer Luftströmung innerhalb des Luftkanalsystems (32, 34, 36, 38, 40, 42, 44) vorhanden ist,
- einen Brenner (18) zum Erhitzen der Luft innerhalb des Luftkanalsystems (32, 34, 36, 38, 40, 42, 44) vorhanden ist,
- der Trockenraum (14) in Längsrichtung (L) gesehen einen linken und rechten oberen Luftabsaugkanal (34.1, 34.2) und einen linken und rechten unteren Lufteinblaskanal (32.1, 32.2) aufweist,
- die Kanäle (32.1, 32.2, 34.1, 34.2) im Wesentlichen auf der gesamten Länge des Trockenraums (14) vorhanden sind,
- eine erste und eine zweite über die Steuereinrichtung (30) ansteuerbare Umlenkeinheit (24, 26) innerhalb des Luftkanalsystems (36, 38) vorhanden ist, mittels derer die Luftströmung von dem rechten oberen Luftabsaugkanal (34.1) zu dem linken unteren Lufteinblaskanal (32.1) oder alternativ von dem linken oberen Luftabsaugkanal (34.2) zu dem rechten unteren Lufteinblaskanal (32.2) leitbar ist, wobei die Steuereinrichtung (30) die Umlenkeinheiten (24, 26) zur Änderung der Luftströmungsrichtung jeweils nach Ablauf eines vorgebbaren Zeitintervalls alternierend schaltet, und
- eine Datenspeicher- und Anzeigeeinrichtung vorhanden ist, die mit mehreren Temperatursensoren kommuniziert und die Temperaturwerte innerhalb des Trockenraums (14) in Abhängigkeit der Zeit während des Trockenprozesses abrufbar speichert.

2. Fahrzeugaufbauvorrichtung nach Anspruch 1,
- **dadurch gekennzeichnet, dass**
- innerhalb des Luftkanalsystems (32, 34, 36, 38, 40, 42, 44) ein Wärmetauscher (22) vorhanden ist, durch den die abgesaugte feuchte, warme Prozessluft und die angesaugte Frischluft zur Vorerwärmung der letzteren geführt ist.

3. Fahrzeugaufbauvorrichtung nach Anspruch 1 oder 2,
- **dadurch gekennzeichnet, dass**
- innerhalb eines Leitluftkanals (40) eine von der Steuereinrichtung (30) ansteuerbare Drosseleinheit (28) vorhanden ist, mittels derer die Menge der nach außen abgeführten Prozessluft und die Menge der im Strömungskreislauf verbleibenden Prozessluft einstellbar ist.

4. Fahrzeugaufbauvorrichtung nach Anspruch 1 bis 3,
- **dadurch gekennzeichnet, dass**
- die Lagerfläche (46) zumindest eine, insbesondere zwei, Rollenbahn/en (48) aufweist, deren Rollen insbesondere motorisch antreibbar ausgebildet sind.

5. Fahrzeugaufbauvorrichtung nach einem oder mehreren der Ansprüche 1 bis 4,
- **dadurch gekennzeichnet, dass**
- die Energiespeichereinrichtung (20) als Flüssiggasspeichereinrichtung ausgebildet ist.

6. Fahrzeugaufbauvorrichtung nach einem oder mehreren der Ansprüche 1 bis 5,
- **dadurch gekennzeichnet, dass**
- der Trockenraum (14) von einer Wärmedämmschicht (19) umgeben ist.

7. Fahrzeugaufbauvorrichtung nach einem oder mehreren der Ansprüche 1 bis 6,
- **dadurch gekennzeichnet, dass**
- ein vor dem Trockenraum (14) stirnseitig angeordneter Maschinenraum (15) vorhanden ist, in dem der Lüfter (16), der Brenner (18) und die Steuereinrichtung (30) angeordnet sind.

8. Fahrzeugaufbauvorrichtung nach einem oder mehreren der Ansprüche 1 bis 7,
- **dadurch gekennzeichnet, dass**
- die Energiespeichereinrichtung (20) unterhalb des Trockenraums (14) angeordnet ist.

9. Fahrzeugaufbauvorrichtung nach einem oder mehreren der Ansprüche 1 bis 8,
- **dadurch gekennzeichnet, dass**
- die Luftabsaug- und einblaskanäle (34.1, 34.2, 32.1, 32.2) jeweils in der in das Innere des Trockenraums (14) weisenden Seitenwandung ein durchgehendes Lochmuster (45) aufweisen, durch das die Luft in den Trockenraum (14) eingeblasen beziehungsweise aus dem Trockenraum (14) abgesaugt wird.

10. Sattelauflieger, Fahrzeuganhänger, Fahrzeug oder dergleichen,
- **dadurch gekennzeichnet, dass**
- eine Fahrzeugaufbauvorrichtung (10) nach einem oder mehreren der vorstehenden Ansprüche vorhanden ist.

## Claims

1. Vehicle attachment device (10) for an articulated trailer (12), vehicle trailer, a vehicle or the like,
- the device (10) being constructed as an autonomously operable drying chamber (14) for wooden pallets (50),
- the device having the following features:
- a drying chamber (14) with a storage area (46) for the pallets (50),
- the air within the drying chamber (14) is heated,
- an energy storage apparatus (20) for energy supply, and
- a control apparatus (30) for controlling the process sequences and temperatures in the drying chamber (14) before, during and after the drying operation of the pallets (50),
- **characterized in that**
- the device (10) contains means in order to be able to implement drying and verification of the drying of wooden pallets in accordance with the International Plant Protection Convention (IPPC) Standard, **in that**
- there is an air duct system (32, 34, 36, 38, 40, 42, 44) having a fresh air duct (42) communicating with the outside and a waste air duct (44) which has a communication connection to the drying chamber (14),
- there is at least one fan for producing an air flow within the air duct system (32, 34, 36, 38, 40, 42, 44),
- there is a burner (18) for heating the air within the air duct system (32, 34, 36, 38, 40, 42, 44),
- as viewed in the longitudinal direction (L), the drying chamber (14) has a left-hand and right-hand upper air extraction duct (34.1, 34.2) and a left-hand and right-hand lower air injection duct (32.1, 32.2),
- the ducts (32.1, 32.3, 34.1, 34.2) are present substantially over the entire length of the drying chamber (14),
- within the air duct system (36, 38) there is a first and a second deflection unit (24, 26), which can be activated via the control apparatus (30) and by means of which the air flow can be led from the right-hand upper air extraction duct (34.1) to the left-hand lower air injection duct (32.1) or alternatively from the left-hand upper air extraction duct (34.2) to the right-hand lower air injection duct (32.2), wherein the control apparatus (30) switches the deflection units (24, 26) alternately, in each case following the expiry of a predefined time interval, to change the air flow direction, and
- there is a data storage and display apparatus, which communicates with multiple temperature sensors and which stores the temperature values within the drying chamber (14) as a function of the time during the drying process such that they can be retrieved.

2. Vehicle attachment device according to Claim 1,
- **characterized in that**
- within the air duct system (32, 34, 36, 38, 40, 42, 44) there is a heat exchanger (22), through which the extracted moist, warm process air and the fresh air taken in is led in order to preheat the latter.

3. Vehicle attachment device according to Claim 1 or 2,
- **characterized in that**
- within an air guide duct (40) there is a throttling unit (28) that can be activated by the control apparatus (30), by means of which the volume of process air led away to the outside and the volume of the process air remaining in the flow circuit is adjustable.

4. Vehicle attachment device according to Claims 1 to 3,
- **characterized in that**
- the storage area (46) has at least one roller track, in particular two roller tracks (48), the rollers of which are in particular constructed such that they can be motor-driven.

5. Vehicle attachment device according to one or more of Claims 1 to 4,
- **characterized in that**
- the energy storage apparatus (20) is constructed as a liquid gas storage apparatus.

6. Vehicle attachment device according to one or more of Claims 1 to 5,
- **characterized in that**
- the drying chamber (14) is surrounded by a thermal insulation layer (19).

7. Vehicle attachment device according to one or more of Claims 1 to 6,
- **characterized in that**
- there is a machine compartment (15) arranged at the front in front of the drying chamber (14), in which the fan (16), the burner (18) and the control apparatus (30) are arranged.

8. Vehicle attachment device according to one or more of Claims 1 to 7,
- **characterized in that**
- the energy storage apparatus (20) is arranged underneath the drying chamber (14).

9. Vehicle attachment device according to one or more of Claims 1 to 8,
- **characterized in that**
- the air extraction and injection ducts (34.1, 34.2, 32.1, 32.2) each have a continuous hole pattern (45) in the side wall pointing into the interior of the drying chamber (14), through which the air is injected into the drying chamber (14) and extracted from the drying chamber (14).

10. Articulated trailer, vehicle trailer, vehicle or the like,
- **characterized in that**
- there is a vehicle attachment device (10) according to one or more of the preceding claims.

## Revendications

1. Dispositif de construction de véhicule (10) pour un semi-remorque (12), une remorque de véhicule, un véhicule ou similaire, dans lequel
- le dispositif (10) est réalisé sous forme d'espace sec (14) pouvant fonctionner de manière autarcique, pour des palettes en bois (50),
- le dispositif (10) présente les caractéristiques suivantes :
- un espace sec (14) avec une surface de stockage (46) pour les palettes (50),
- l'air à l'intérieur de l'espace sec (14) est chauffé,
- un dispositif de stockage d'énergie (20) pour l'alimentation en énergie et
- un dispositif de commande (30) pour commander les déroulements de processus et les températures dans l'espace sec (14) avant, pendant et après l'opération de séchage des palettes (50),
- **caractérisé en ce que**
- le dispositif (10) contient des moyens pour pouvoir mettre en oeuvre un séchage et une mise en évidence du séchage de palettes en bois conformément à la norme de la Convention internationale pour la protection des végétaux (CIPV), par le fait que
- un système de conduits d'air (32, 34, 36, 38, 40, 42, 44) est prévu avec un conduit d'air frais (42) communiquant avec l'extérieur et avec un conduit d'air d'évacuation (44) qui est en liaison de communication avec l'espace sec (14),
- au moins un ventilateur est prévu pour générer un flux d'air à l'intérieur du système de conduits d'air (32, 34, 36, 38, 40, 42, 44),
- un brûleur (18) est prévu pour chauffer l'air à l'intérieur du système de conduits d'air (32, 34, 36, 38, 40, 42, 44),
- l'espace sec (14), vu dans la direction longitudinale (L), présente un conduit d'aspiration d'air gauche et droit supérieur (34.1, 34.2) et un conduit de soufflage d'air gauche et droit inférieur (32.1, 32.2),
- les conduits (32.1, 32.2, 34.1, 34.2) sont prévus essentiellement sur toute la longueur de l'espace sec (14),
- une première et une deuxième unité de déviation (24, 26) pouvant être commandées par le biais du dispositif de commande (30) sont prévues à l'intérieur du système de conduits d'air (36, 38), au moyen desquelles l'écoulement d'air peut être conduit depuis le conduit d'aspiration d'air droit supérieur (34.1) jusqu'au conduit de soufflage d'air gauche inférieur (32.1) ou, en variante, depuis le conduit d'aspiration d'air gauche supérieur (34.2) jusqu'au conduit de soufflage d'air droit inférieur (32.2), le dispositif de commande (30) commutant en alternance les unités de déviation (24, 26) pour modifier le sens d'écoulement de l'air à chaque fois après l'écoulement d'un intervalle de temps prédéfinissable, et
- un dispositif de stockage de données et d'affichage est prévu, lequel communique avec plusieurs capteurs de température et mémorise, de manière à pouvoir les appeler, des valeurs de température à l'intérieur de l'espace sec (14) en fonction du temps pendant le processus de séchage.

2. Dispositif de construction de véhicule selon la revendication 1,
- **caractérisé en ce que**
- à l'intérieur du système de conduits d'air (32, 34, 36, 38, 40, 42, 44) est prévu un échangeur de chaleur (22) par lequel l'air de processus chaud humide aspiré et l'air frais aspiré sont guidés en vue de préchauffer ce dernier.

3. Dispositif de construction de véhicule selon la revendication 1 ou 2,
- **caractérisé en ce que**
- à l'intérieur d'un conduit d'air de guidage (40) est prévue une unité d'étranglement (28) pouvant être commandée par le dispositif de commande (30), au moyen de laquelle la quantité d'air de processus évacué vers l'extérieur et la quantité d'air de processus restant dans le circuit d'écoulement peuvent être ajustées.

4. Dispositif de construction de véhicule selon la revendication 1 à 3,
- **caractérisé en ce que**
- la surface de stockage (46) présente au moins un, en particulier deux, trains de rouleaux (48), dont les rouleaux sont notamment réalisés de manière à pouvoir être entraînés par moteur.

5. Dispositif de construction de véhicule selon l'une quelconque ou plusieurs des revendications 1 à 4,
- **caractérisé en ce que**
- le dispositif de stockage d'énergie (20) est réalisé sous forme de dispositif de stockage de gaz liquéfié.

6. Dispositif de construction de véhicule selon l'une quelconque ou plusieurs des revendications 1 à 5,
- **caractérisé en ce que**
- l'espace sec (14) est entouré par une couche d'isolation thermique (19).

7. Dispositif de construction de véhicule selon l'une quelconque ou plusieurs des revendications 1 à 6,
- **caractérisé en ce que**
- un espace de machine (15) disposé du côté frontal avant l'espace de séchage (14) est prévu, dans lequel le ventilateur (16), le brûleur (18) et le dispositif de commande (30) sont disposés.

8. Dispositif de construction de véhicule selon l'une quelconque ou plusieurs des revendications 1 à 7,
- **caractérisé en ce que**
- le dispositif de stockage d'énergie (20) est disposé en dessous de l'espace de séchage (14).

9. Dispositif de construction de véhicule selon l'une quelconque ou plusieurs des revendications 1 à 8,
- **caractérisé en ce que**
- les conduits d'aspiration d'air et de soufflage d'air (34.1, 34.2, 32.1, 32.2) présentent à chaque fois dans la paroi latérale tournée vers l'intérieur de l'espace sec (14), un motif de trous continus (45) à travers lesquels l'air est soufflé dans l'espace sec (14), ou est aspiré hors de l'espace sec (14).

10. Semi-remorque, remorque de véhicule, véhicule ou similaire,
- **caractérisé en ce qu'**il est prévu
- un dispositif de construction de véhicule (10) selon l'une quelconque ou plusieurs des revendications précédentes.
